# EUROPEAN PATENT SPECIFICATION

(11) **EP 0 735 377 B1**
(45) Date of publication and mention of the grant of the patent: **17.03.2004**
(21) Application number: 96200826.4
(22) Date of filing: 27.03.1996
(51) Int. Cl.: G01R 31/06, G01R 27/26, G01V 13/00, G01R 29/20

(54) **Metal detector coil inductance testing**
Prüfung der Induktion von Metalldetektorspulen
Test de l'induction de bobine de détecteur de métaux

(30) Priority: 31.03.1995 US 414788; 31.03.1995 US 414330
(43) Date of publication of application: 02.10.1996
(73) Proprietor: CNH Belgium N.V., 8210 Zedelgem (BE)
(72) Inventor: Strosser, Richard P., Akron, PA 17540 (US); Chow, Mark K., Paoli, PA 19301 (US)
(74) Representative: Vandenbroucke, Alberic

(56) References cited:
- US-A- 4 084 135
- US-A- 4 230 987

## Description

This invention relates to the testing of detection coils in a metal detector of an agricultural harvesting machine and more particularly to the testing of the inductance of the detection coils in a multi-channel magnetic metal detector.

It is conventional to provide metal detectors in crop processing machines such as forage harvesters, the purpose of the metal detectors being to detect metal picked up from a field with the crop material. When the metal detector detects the passage of a metal object through the crop feed path, the detector produces an output signal to stop the crop feed mechanism before the metal object can be fed into the crop cutter knives.

As illustrated in US-A-4,433,528, the metal detector detection coils and associated detection circuits may be located within a housing to protect them from dust and moisture. The housing may in turn be located within a rotatable crop feed roll so as to position the detection coils as close as possible to the crop feed path. Furthermore, the coils may also be encased in a potting material. This makes it difficult to access the detection coils for test purposes. On the other hand, it is desirable that the metal detector be frequently checked to assure its sensitivity and operability because, if the metal detector is not functioning properly, metal objects may not be detected and thus may enter the cutter mechanism where they may cause considerable damage.

It would be possible to provide an additional coil for testing purposes, the test coil being disposed in proximity to the detection coils so that an emf (electromotive force) is induced in the detection coils upon application of a signal to the test coil. However, this adds to the cost of producing the system. Furthermore, the limited space available within the housing in which the metal detector is located makes it difficult to add an additional coil.

Such additional coil may be removable as in the test apparatus of US-A-4,639,666. However such apparatus is not readily available to the operators of the harvesting machine during or in between harvesting operations and its use involves disconnecting portions of the metal detector circuitry in order to plug in the connector of the test apparatus, such that frequent testing is rather discouraged.

Some metal detectors, such as the one illustrated in US-A-4,433,528 have two channels. That is, the detectors have two detection coils, each connected to a respective one of two detection circuits which serve to amplify and filter the output signals from the detection coils. To insure a more uniform sensitivity of the metal detector across the width of the crop feed path, each detection coil is formed so as to comprise a series of generally triangular segments, the segments of one coil nesting between two segments of the other coil. Because of the close spacing, the detection coils are mutually inductively coupled. The present invention utilizes this mutual inductance in the testing of the inductance of the coils.

According to one aspect of the present invention, a method is provided for simultaneously testing the inductance of detection coils in a metal detector of an agricultural machine,
said detector comprising first and second detection coils disposed in a magnetic detection field and arranged so that there is mutual inductance between said first and second detection coils; and
an electrical circuit being connected to said second detection coil and being operable to produce an output signal depending on the electromotive force induced in said second detection coil.

Said method is characterized in that it comprises the steps of:
applying a test signal having a predetermined magnitude to an end of said first detection coil; and
sensing the magnitude of the output signal from said electrical circuit connected to the second coil, resulting from applying said test signal to said end of said first detection coil.

The sensed output signal may be used for comparison with a predetermined range of values, corresponding to normal coil conditions, and producing an error signal when it fall outside said range.

Advantageously, one can use one of the metal detection circuits for sensing the effect of the signal applied to one coil on the other coil.

According to another aspect of the invention there is provided an apparatus for simultaneously testing the inductance of detection coils in a metal detector of an agricultural machine, said detector comprising:
first and second detection coils disposed in a magnetic detection field and arranged so that there is mutual inductance between said first and second detection coils; and
first and second detection circuits connected to said first and second detection coils, respectively, for producing output signals corresponding to signals induced in said coils as a metal object passes through said magnetic detection field.

Said apparatus is characterized in that it comprises:
means for applying a test signal having a predetermined value to an end of said first detection coil; and
sensing means for sensing the magnitude of an output signal from said second detection circuit resulting from applying said test signal to said first detection coil.

This testing apparatus may also comprise means for comparing the output signal from the second circuit with a range of values, corresponding to normal coil conditions and generate an error signal when it does not fall in said range.

Advantageously, the applied test signal may be a square wave signal. It may be generated by a digital to analog converter which is loaded with a series of words representing the magnitude of the wave signal at successive points in time.
Figs. 1A and 1B, when arranged as shown in Fig. 1C, comprise a wiring diagram of a metal detector having connected thereto a test apparatus according to the present invention; and
Fig. 2 schematically illustrates the crop feed and cutter portions of a prior art forage harvester having a metal detector located in a feed roll.

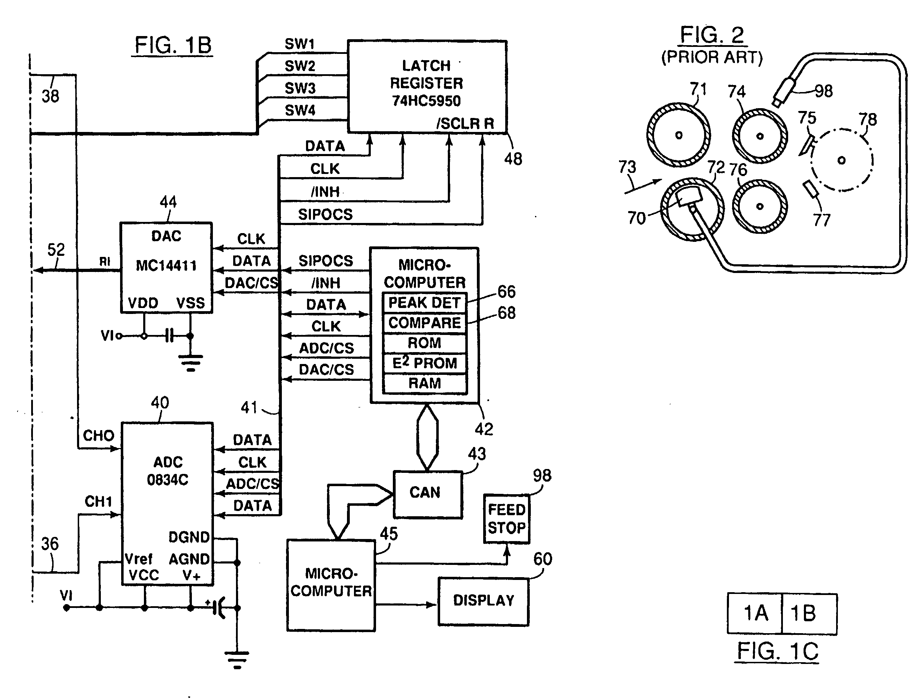

As shown in Fig. 2, the metal detector is located within a housing 70 that is in turn located within a rotatable lower front feed roll 72. Crop material 73 is picked up from a field by a pick-up mechanism (not shown) and fed between lower and upper front feed rolls 72, 71 and lower and upper rear feed rolls 76, 74 to a cutter mechanism comprising a rotating reel 78 having peripheral cutter knives 75 cooperating with a stationary cutter bar 77 to cut the crop material. Obviously, metal objects fed between knives 75 and cutter bar 76 can severely damage the cutter mechanism. The metal detector prevents such damage by sensing metal objects and, upon sensing such an object, producing an output signal which is applied to a stop mechanism 98 to stop the feed rolls.

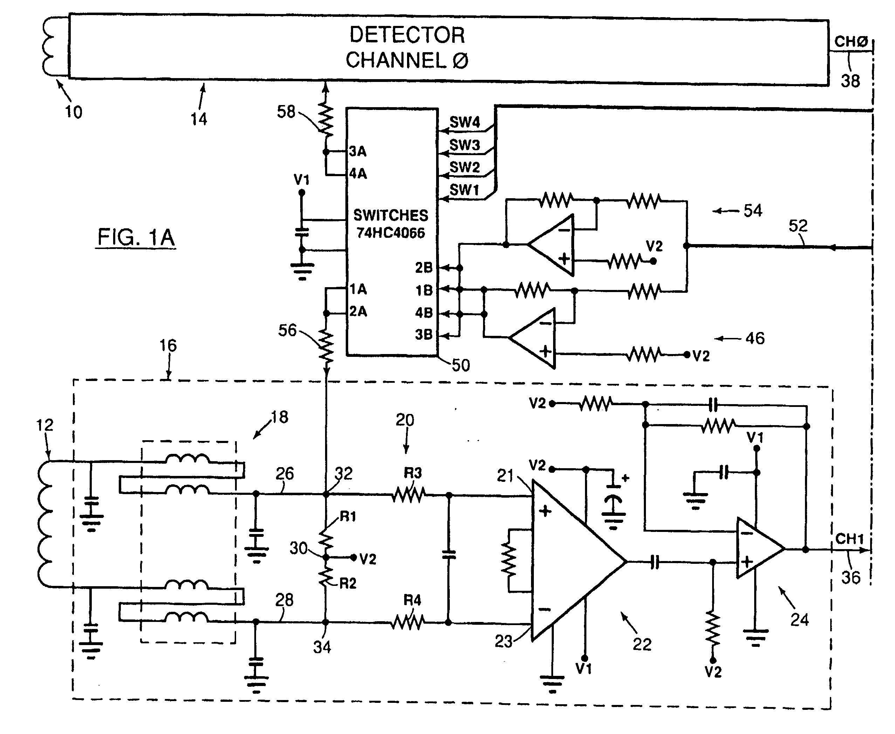

As shown in Fig. 1A, the metal detector comprises first and second detector coils 10, 12, connected respectively to first and second channels or detection circuits 14, 16. It will be understood that coils 10, 12 are mutually inductively coupled and are disposed in magnetic detection fields generated by suitable means (not shown) so that metal objects passing through the magnetic detection fields perturb the flux of the fields thereby inducing an emf (electromotive force) in the coils. The arrangement of coils 10, 12 and the means for generating the magnetic fields may, for example, be as shown in US-A-4,433,528.

The detection circuits 14, 16 are identical, hence only the details of the detection circuit 16 are shown in Fig. 1A. Each detection circuit includes an RFI filter section 18, a balanced resistor network 20 feeding first and second inputs 21, 23 of a differential amplifier 22, and a low pass audio filter 24.

The ends of coil 12 are connected to inputs of the RFI filter section 18, which serves to filter out any radio frequency interference picked up by coil 12. The output leads 26, 28 of filter section 18 are connected to the balanced resistor network 20 which comprises four resistors R₁, R₂, R₃ and R₄. Resistors R₁ and R₂ have equal resistances (about 1 K). A bias voltage V2 (+2.5 V) is connected to a junction 30 between first ends of R₁ and R₂. The second ends of R₁ and R₂ are connected to leads 26, 28 at junctions 32 and 34, respectively. Resistors R₃ and R₄ have equal resistances (about 250 K). One end of resistor R₃ is connected to the first input 21 of differential amplifier 22 and the other end is connected to junction 32. One end of resistor R₄ is connected to the second input 23 of differential amplifier 22 and the other end is connected to junction 34.

Preferably, the detection coil 12 is located in a static magnetic detection field so that in the absence of movement of a metal object through the detection field, there is no potential difference between the ends of coil 12 and V2 determines the voltages at the inputs of differential amplifier 22 and thus the steady state output of the amplifier. Moving parts of the agricultural machine distort the detection field and the field is further distorted each time a tramp metal object passes through the field. As the detection field is distorted, an emf is induced in coil 12. Since the ends of the coil are coupled to second ends of resistors R₁, R₂ the induced emf first adds to V2 at one of junctions 32, 34 and opposes V2 at the other junction as a metal object enters the detection field and then reverses polarity as the metal object leaves the detection field. This results in unequal voltages being applied to the inputs of the differential amplifier 22 and it produces an output signal that varies about the steady state reference according to the difference in potential at inputs 21, 23.

The output signal from differential amplifier 22 is applied to the filter 24. Filter 24 filters out the high frequency "noise" caused by cyclic movement of parts of the agricultural machine in the detection field. The filtered signal CH1 at the output of filter 24 is applied via a lead 36 to one input of a multi-channel analog to digital converter (ADC) 40 (Fig. 1B).

The purpose of ADC 40 is to convert the magnitudes of the analog signals CH0 and CH1 to digital values representing the magnitudes of the signals. The ADC is controlled by a conventional microcomputer 42 having a CPU and RAM, ROM and E²PROM memories. A serial bus link 41 interconnects the microcomputer 42 and ADC 40. The microcomputer executes a program during which it sends signals to the ADC 40 to enable the ADC, select one of the input channels, and transfer to the microcomputer a digital signal DATA, representing the magnitude of the output signal of the selected channel at the time the ADC is enabled. The ADC 40 is controlled to sample and digitize each of the signals CH0 and CH1 every 2.5 ms.

A positive and a negative threshold or reference value is stored in the E²PROM memory of the microcomputer for each of the metal detector channels. During normal operation of the metal detector, that is, during the time the metal detector is being operated to sense tramp metal objects, each digital value transferred from the ADC is compared with the positive and negative threshold values for that channel. The threshold values define the upper and lower limits within which the magnitude of the output signal from a respective channel will fall as long as the coil connected to the channel does not detect the passage of a tramp metal object. If a comparison shows that a value produced by ADC 40 is greater than the positive threshold value or less than (i.e. more negative than) the negative threshold value with which it is compared, thereby indicating the detection of tramp metal, the microcomputer 42 produces an output signal that is applied via serial data link 43 which may be a Controller Area Network (CAN), and a further microcomputer 45 to the stop mechanism 98 to stop the crop feed rolls.

In accordance with the present invention, the inductance of detection coils 10, 12 is tested by injecting a test signal of known magnitude into the detection coil connected to one detection circuit and determining the magnitude of the resulting output signal from the other detection circuit. The apparatus for injecting the test signal comprises an digital to analog converter (DAC) 44, a buffer 54, FET switches 50 and a latch register 48, in addition to microcomputer 42.

DAC 44 is connected to microcomputer 42 via the serial data link 41. During a test of detection coil resistance, the microcomputer enables DAC 44 every 2.5 ms and transfers a digital value to a holding register in the DAC. The DAC converts the digital value to an equivalent analog voltage which is applied over a lead 52 to an attenuator 46 and a buffer 54. The buffer 54 is used for inductance testing of coils 10 and 12. Inductance testing requires a larger test signal than resistance testing and since DAC 44 may be used to generate the test signal for both tests, attenuator 46 serves to reduce the magnitude of the test signal during resistance testing.

The output of attenuator 46 is connected to inputs 1B and 4B of two FET switches 50 and the output of buffer 54 is connected to inputs 2B and 3B of two further FET switches 50. Only one of the switches is turned on at a time, the active switch being determined by which of the addressing or selection signals SW1-SW4 is active.

When signal SW1 is active, the output of attenuator 46 is passed through a first switch to output 1A and when SW2 is active the output of buffer 54 is connected through a second switch to output 2A. The outputs 1A and 2A are tied together and connected through a resistor 56 to the junction 32.

The signals SW3 and SW4 enable third and fourth switches, respectively so that the output of buffer 54 is passed through the third switch to output 3A or the output of attenuator 46 is passed through the fourth switch to the output 4A. Outputs 3A and 4A are connected together and are further connected through a resistor 58 to a point in detector channel 0 corresponding to the junction 32 in channel 1.

The selection signals are applied to switches 50 from the register 48. Register 48 is an 8-bit serial input, parallel output register with latches. The register receives data from microcomputer 42 via the serial data link 41.

When the resistance or inductance of a detection coil 10, 12 is to be tested, microprocessor 42 sends a code word to latch register 48 to select which detection coil 10, 12 is to receive the test signal and which test is to be performed. The test performed and the coil to which the test signal is applied, are determined by a 1-bit in one of four bit positions of the code word as indicated in the following table:

**TABLE I**

| Code Word | Register Output | Test Performed |
|---|---|---|
| 1000 0000 | SW1 | Resistance of coil 12 |
| 0100 0000 | SW2 | Inductance, signal applied to coil 12 |
| 0010 0000 | SW3 | Inductance, signal applied to coil 10 |
| 0001 0000 | SW4 | Resistance of coil 10 |

After the latch register has been loaded, the microcomputer 42 enables DAC 44 every 2.5 ms and transfers to a holding register in the DAC a digital value representing a point on a square wave. The digital values applied to DAC 44 are such that the DAC produces a square wave output signal having a low frequency. The frequency is such that an output signal, produced by the amplifier 22 in one of the detection circuits 14, 16 in response to the square wave as subsequently described, will pass through the low pass filter 24 in the detection circuit. The square wave signal is applied in parallel through buffer 54 and attenuator 46 to inputs of switches 50. The attenuator 46 is used only during resistance testing of detection coils 10, 12 as explained above and is not used during inductance testing of the coils.

The code word initially loaded into latch register 48 will be 0010 0000 and the register produces the signal SW3 test if the induction test signal is to be injected into detection coil 10. On the other hand, if the induction test signal is to be applied to detection coil 12, the register is loaded with the value 0100 0000 so that it produces the signal SW2. Assuming the register is set to produce the signal SW2, the square wave output signal from DAC 44 passes through buffer 54, one of switches 50 and a resistor 36 to one end of detection coil 12.

The resulting current flow through detection coil 12 produces a periodically varying magnetic field with flux lines linking detection coil 10. As the flux linking coil 10 varies, an emf is induced in coil 10.

The number of flux lines produced by detection coil 12 is proportional to the inductance of coil 12 and the emf induced in coil 10 is proportional to the inductance of coil 10; hence the emf induced in coil 10 has a magnitude that is dependent on the inductances of both coils and may be measured to detect variations in the inductances of the coils.

According to known electrical principles, the emf induced in coil 10 is directly proportional to the time rate of change of the flux linkages. It is for this reason that a square wave is injected as the test signal.

The induced emf in coil 10 provides a potential difference between the ends of the coil which is amplified and filtered by detection circuit 14 and applied to ADC 40. Microcomputer 42 enables ADC 40 every 2.5 ms and transfers to the microcomputer a digital value representing the magnitude of the output signal CH0 from detection circuit 14.

The microcomputer includes a flash ROM (E²PROM) memory. This memory stores first and second threshold values MIN and MAX, respectively. MIN represents the minimum acceptable magnitude of an output signal from the metal detector when the square wave signal is applied to coil 12 and MAX represents the maximum acceptable magnitude of an output signal from the metal detector when the square wave signal is applied to coil 12. Since the magnitude of the square wave signal applied to coil 12 is known, one may calculate from the circuit design of the detection channels what the maximum positive magnitude (X) of the output signal from the metal detector should be. The threshold values MAX and MIN are chosen to be greater than, and less than X, respectively. The differences between MAX and X and MIN and X are dependent on tolerance, that is, on how much variation in a detector output signal is acceptable without unduly affecting the performance of the detector. The tolerance value is added to X to determine MAX and subtracted from X to determine MIN. Having made this determination, the threshold values MAX and MIN are loaded into the E²PROM at the factory or when a new metal detector is installed and thus define a predetermined range of acceptable magnitudes of the detector output signal in response to the square wave signal.

The digital values produced by ADC 40 during the time the square wave is applied to coil 12, are applied to a positive peak detector 66 implemented by programming in the microcomputer 42. The peak detector determines the peak or largest of the digital values produced by the ADC 40. This peak value is then compared by a comparator 68 with MAX and MIN. If the peak value is greater than MAX or less than MIN, the microcomputer sends an error message via serial data link 43 and microcomputer 45 to a display 60 to provide an operator with an indication that the inductance test of the metal detector coils has found an abnormal condition.

The coil inductance test described above does not measure the inductance of a detection coil nor does it provide an indication of which coil 10 or 12 is defective. It merely provides an indication that one of the coils is defective. This presents no problem since the coils are normally embedded in potting material and replaced as a unit in the event of a defect or failure.

The coil inductance test as described above assumed that the square wave signal was injected into coil 12 with the output signal from detection channel or circuit 14 being sampled by ADC 40. The test may also be performed by injecting the square wave into coil 10 while ADC 40 samples the output signal from detection channel or circuit 16. In this case latch register 48 is loaded with the value 0010 000 so that the signal SW3 is produced. SW3 enables a switch 50 so that the square wave from buffer 54 is applied through resistor 58 to coil 10. Microcomputer 42 controls ADC 40 so that the output signal from detection circuit 14 is sampled and transferred to the computer for comparison with MAX and MIN. The test result is the same, regardless of whether the test signal is injected into detection coil 10 or detection coil 12.

Although a specific preferred embodiment has been described in detail to illustrate the principles of the invention, it will be understood that various modifications and substitutions may be made in the described embodiment without departing from the scope of the invention as defined by the appended independent claims. The invention is not limited in practice to a specific metal detector but may be used in metal detectors of various designs having different coil configurations so long as the detector has inductively coupled detection coils. Furthermore, although the invention is admirably suited for use with metal detectors in forage harvesters, it may also be used in other agricultural machines or equipment wherein metal detectors are provided.

## Claims

1. A method of simultaneously testing the inductance of detection coils (10, 12) in a metal detector of an agricultural machine,
said detector comprising first and second detection coils (10, 12) disposed in a magnetic detection field and arranged so that there is mutual inductance between said first and second detection coils (10, 12); and
an electrical circuit (16) being connected to said second detection coil (12) and being operable to produce an output signal (CH1) depending on the electromotive force induced in said second detection coil (12),
said method being **characterized in that** it comprises the steps of:
applying a test signal having a predetermined magnitude to an end of said first detection coil (10); and
sensing the magnitude of said output signal (CH1) from said electrical circuit (16) connected to said second coil (12), resulting from applying said test signal to said end of said first detection coil (10).

2. A testing method according to claim 1, **characterized in that** it comprises the further steps of:
determining if the magnitude of said resulting output signal (CH1) from said electrical circuit (16) falls within a predetermined range of magnitudes; and
producing an error signal when it is determined that said sensed output signal (CH1) does not fall within said predetermined range of magnitudes.

3. A testing method according to claim 2, **characterized in that** the magnitude of said sensed output signal (CH1) is converted to digital values (DATA), a peak magnitude is determined among said digital values (DATA), and said peak magnitude is compared with threshold values defining limits of said range of magnitudes.

4. A testing method according to any of the preceding claims, **characterized in that** said test signal applied to said first detection coil (10) is a square wave signal.

5. A testing method according to any of the preceding claims, **characterized in that** said electrical circuit (16) is incorporated into said metal detector and is operable to produce an output signal (CH1) for actuating a stop mechanism (98), said signal corresponding to an electromotive force induced in said second coil (12) as a metal object passes through said magnetic detection field.

6. Apparatus for simultaneously testing the inductance of detection coils (10, 12) in a metal detector of an agricultural machine, said detector comprising:
first and second detection coils (10, 12) disposed in a magnetic detection field and arranged so that there is mutual inductance between said first and second detection coils (10, 12); and
first and second detection circuits (14, 16) connected to said first and second detection coils (10, 12), respectively, for producing output signals (CHO, CH1) corresponding to signals induced in said coils (10, 12) as a metal object passes through said magnetic detection field,
said apparatus being **characterized in that** it comprises:
means (42, 44, 54, 50, 48) for applying a test signal having a predetermined value to an end of said first detection coil; and
sensing means (40, 42) for sensing the magnitude of an output signal (CH1) from said second detection circuit (16) resulting from applying said test signal to said first detection coil (10).

7. Apparatus according to claim 6, **characterized in that** it further comprises:
means (42) for determining if the magnitude of said sensed output signal (CH1) from said second detection circuit (16) falls within a predetermined range of values; and
means (42, 43, 45) for producing an error signal when it is determined that the magnitude of said sensed output signal (CH1) does not fall within said predetermined range of values.

8. Apparatus according to claim 7, **characterized in that**:
said sensing means (40, 42) comprises an analog to digital converter (40) connected to and controlled by a microcomputer (42) for converting the output signal (CH1) from said second detection circuit (16) into digital values (DATA) representing the magnitude of said output signal (CH1); and
said means (42) for determining if the magnitude of said output signal (CH1) falls within said predetermined range of values comprises means (E²PROM) in said microcomputer (42) for storing first and second threshold values and means (66, 68) for comparing said threshold values with said digital values (DATA).

9. Apparatus according to claim 8, **characterized in that** said comparing means (66, 68) includes a peak detector (66) for detecting a peak value among said digital values (DATA), and a comparator (68) for comparing said peak value with said first and second threshold values.

10. Apparatus according to any of the claims 6 to 9, **characterized in that** said test signal is a square wave signal.

11. Apparatus according to any of the claims 6 to 10, **characterized in that** said means for applying said test signal (42, 44, 54, 50, 48) comprises:
a digital to analog converter (44);
a microcomputer (42) for controlling said digital to analog converter (44) and supplying thereto successive code words representing the magnitude of a wave signal at successive points in time, whereby said digital to analog converter (44) produces a wave output signal; and
means (54, 50) for applying said wave output signal to said first detection coil (10) as said test signal.

## Patentansprüche

1. Verfahren zum gleichzeitigen Prüfen der Induktivität von Detektionsspulen (10,12) in einem Metalldetektor einer landwirtschaftlichen Maschine,
wobei der Detektor erste und zweite Detektionsspulen (10, 12) umfasst, die in einem magnetischen Detektionsfeld angeordnet und so ausgebildet sind, dass sich eine gegenseitige Induktivität zwischen den ersten und zweiten Detektionsspulen (10, 12) ergibt; und
eine elektrische Schaltung (16), die mit der zweiten Detektionsspule (12) verbunden und betreibbar ist, um ein Ausgangssignal (CH1) in Abhängigkeit von der in der zweiten Detektionsspule (12) induzierten elektromotorischen Kraft zu erzeugen,
wobei das Verfahren **dadurch gekennzeichnet ist, dass** es die folgenden Schritte umfasst:
Anlegen eines Prüfsignals mit einer vorgegebenen Amplitude an ein Ende der ersten Detektionsspule (10); und
Messen der Amplitude des Ausgangssignals (CH1) von der mit der zweiten Spule (12) verbundenen elektrischen Schaltung (16), das sich aus dem Anlegen des Prüfsignals an das Ende der ersten Detektionsspule (10) ergibt.

2. Prüfverfahren nach Anspruch 1, **dadurch gekennzeichnet, dass** es die folgenden weiteren Schritte umfasst:
Bestimmen, ob die Amplitude des resultierenden Ausgangssignals (CH1) von der elektrischen Schaltung (16) in einen vorgegebenen Bereich von Amplituden fällt; und
Erzeugen eines Fehlersignals, wenn festgestellt wird, dass das gemessene Ausgangssignal (CH1) nicht in den vorgegebenen Bereich von Amplituden fällt.

3. Prüfverfahren nach Anspruch 2, **dadurch gekennzeichnet, dass** die Amplitude des gemessenen Ausgangssignals (CH1) in digitale Werte (DATA) umgewandelt wird, eine Spitzenamplitude aus den digitalen Werten (DATA) bestimmt wird und die Spitzenamplitude mit Schwellenwerten verglichen wird, die Grenzen des Bereiches von Amplituden definieren.

4. Prüfverfahren nach einem der vorhergehenden Ansprüche, **dadurch gekennzeichnet, dass** das an die erste Detektionswicklung (10) angelegte Prüfsignal ein Rechteckschwingungssignal ist.

5. Prüfverfahren nach einem der vorhergehenden Ansprüche, **dadurch gekennzeichnet, dass** die elektrische Schaltung (16) in den Metalldetektor eingefügt ist und betreibbar ist, um ein Ausgangssignal (CH1) zur Betätigung eines Stopmechanismus (28) zu erzeugen, wobei das Signal einer elektromotorischen Kraft entspricht, die in der zweiten Spule (12) induziert wird, während ein Metallgegenstand durch das magnetische Detektionsfeld hindurch läuft.

6. Vorrichtung zum gleichzeitigen Prüfen der Induktivität von Detektionsspulen (10, 12) in einem Metalldetektor einer landwirtschaftlichen Maschine, wobei der Detektor folgendes umfasst:
erste und zweite Detektionsspulen (10, 12), die in einem magnetischen Detektionsfeld angeordnet und so ausgebildet sind, dass sich eine gegenseitige Induktivität zwischen den ersten und zweiten Detektionsspulen (10, 12) ergibt; und
erste und zweite Detektionsschaltungen (14, 16), die mit den ersten und zweiten Detektionsspulen (10, 12) verbunden sind, um Ausgangssignale (CH0, CH1) zu erzeugen, die Signalen entsprechen, die in den Spulen (10, 12) induziert werden, während ein Metallgegenstand durch das magnetische Detektionsfeld hindurchläuft,
wobei die Vorrichtung **dadurch gekennzeichnet ist, dass** sie Folgendes umfasst:
Einrichtungen (42, 44, 54, 50, 48) zum Anlegen eines Prüfsignals mit einem vorgegebenen Wert an ein Ende der ersten Detektionsspule; und
Messeinrichtungen (40, 42) zur Messung der Amplitude eines Ausgangssignals (CH1) von der zweiten Detektionsschaltung (16), das sich aus dem Anlegen des Prüfsignals an die erste Detektionsspule (10) ergibt.

7. Vorrichtung nach Anspruch 6, **dadurch gekennzeichnet, dass** sie weiterhin Folgendes umfasst:
Einrichtungen (42) zur Feststellung, ob die Amplitude des gemessenen Ausgangssignals (CH1) von der zweiten Detektionsschaltung (16) in einen vorgegebenen Bereich von Werten fällt; und
Einrichtungen (42, 43, 45) zur Erzeugung eines Fehlersignals, wenn festgestellt wird, dass die Amplitude des gemessenen Ausgangssignals (CH1) nicht in den vorgegebenen Bereich von Werten fällt.

8. Vorrichtung nach Anspruch 7, **dadurch gekennzeichnet, dass**:
die Messeinrichtung (40, 42) einen Analog-/Digital-Wandler (40) umfasst, der mit einem Mikrocomputer (42) verbunden und durch diesen gesteuert ist, um das Ausgangssignal (CH1) von der zweiten Detektionsschaltung (16) in digitale Werte (DATA) umzuwandeln, die die Amplitude des Ausgangssignals (CH1) darstellen; und
die Einrichtungen (42) zur Feststellung, ob die Amplitude des Ausgangssignals (CH1) in den vorgegebenen Bereich von Werten fällt, Einrichtungen (E²PROM) in dem Mikrocomputer (42) zum Speichern erster und zweiter Schwellenwerte und Einrichtungen (66, 68) zum Vergleich der Schwellenwerte mit den digitalen Werten (DATA) umfasst.

9. Vorrichtung nach Anspruch 8, **dadurch gekennzeichnet, dass** die Vergleichereinrichtung (66, 68) einen Spitzenwertdetektor (66) zur Feststellung eines Spitzenwertes aus den digitalen Werten (DATA) und einen Vergleicher (68) zum Vergleich des Spitzenwertes mit den ersten und zweiten Schwellenwerten umfasst.

10. Vorrichtung nach einem der Ansprüche 6 bis 9, **dadurch gekennzeichnet, dass** das Prüfsignal ein Rechteckschwingungssignal ist.

11. Vorrichtung nach einem der Ansprüche 6 bis 10, **dadurch gekennzeichnet, dass** die Einrichtung zum Anlegen des Testsignals (42, 44, 54, 50, 48) Folgendes umfasst:
einen Digital-/Analog-Wandler (44);
einen Mikrocomputer (42) zur Steuerung des Digital-/Analog-Wandlers (44) und zur Lieferung von aufeinanderfolgenden Codeworten an diesen, die die Amplitude eines Schwingungssignals an aufeinanderfolgenden Zeitpunkten darstellen, wodurch der Digital-/Analog-Wandler (44) ein Schwingungs-Ausgangssignal erzeugt; und
Einrichtungen (54, 50) zum Anlegen des Schwingungs-Ausgangssignals an die erste Detektionsspule (10) als das Testsignal.

## Revendications

1. Méthode pour tester simultanément l'inductance des bobinages (10, 12) de détection dans un détecteur de métaux d'une machine agricole,
ledit détecteur comprenant les premier et second bobinages (10, 12) de détection disposés dans un champ magnétique de détection et ordonnés de manière à avoir une inductance mutuelle entre lesdits premier et second bobinages de détection (10, 12) ; et
un circuit électrique (16) qui est connecté audit second bobinage de détection (12) et qui peut être utilisé pour produire un signal de sortie (CH1) en fonction de la force électromotrice induite dans ledit second bobinage de détection (12),
ladite méthode étant **caractérisée en ce qu'**elle comprend les étapes suivantes :
application d'un signal de test d'une grandeur prédéterminée à une extrémité dudit premier bobinage de détection (10) ; et
relèvement de la grandeur du signal de sortie (CH1) dudit circuit électrique (16) connecté au second bobinage (12), découlant de l'application dudit signal de test à ladite extrémité dudit premier bobinage de détection (10).

2. Méthode de test selon la revendication 1, **caractérisée en ce qu'**elle comprend les autres étapes ci-après :
détermination du fait que la grandeur dudit signal de sortie résultant (CH1) dudit circuit électrique (16) se situe dans une fourchette de grandeurs prédéterminée ; et
production d'un signal d'erreur lorsqu'il a été déterminé que ledit signal de sortie relevé (CH1) ne se situe pas dans ladite fourchette de grandeurs prédéterminée.

3. Méthode de test selon la revendication 2, **caractérisée en ce que** la grandeur dudit signal de sortie relevé (CH1) est convertie en valeurs numériques (DONNEES), une grandeur de pic est déterminée parmi lesdites valeurs numériques (DONNEES), et ladite grandeur de pic est comparée aux valeurs de seuil qui définissent les limites de ladite fourchette de grandeurs.

4. Méthode de test selon l'une quelconque des revendications précédentes, **caractérisée en ce que** ledit signal-test appliqué audit premier bobinage de détection (10) est un signal carré.

5. Méthode de test selon l'une quelconque des revendications précédentes, **caractérisée en ce que** ledit circuit électrique (16) est introduit dans ledit détecteur de métaux et peut être utilisé pour produire un signal de sortie (CA) afin d'actionner un mécanisme d'arrêt (98), ledit signal correspondant à une force électromotrice induite dans ledit second bobinage (12) lorsqu'un objet métallique traverse ledit champ magnétique de détection.

6. Appareil pour tester simultanément l'inductance des bobinages de détection (10, 12) dans un détecteur de métaux d'une machine agricole, ledit détecteur comprenant :
les premier et second bobinages de détection (10, 12) disposés dans un champ magnétique de détection et ordonnés de manière à avoir une inductance mutuelle entre lesdits premier et second bobinages de détection (10, 12) ; et
les premier et second circuits de détection (14, 16) connectés respectivement aux premier et second bobinages de détection (10, 12) , pour produire des signaux de sortie (CHO, CH1) correspondant aux signaux induits dans lesdits bobinages (lorsque l'objet métallique passe dans ledit champ magnétique de détection.
Ledit appareil étant **caractérisée en ce qu'**il comprend :
des moyens (42, 44, 54, 50, 48) pour appliquer un signal de test d'une valeur prédéterminée à une extrémité dudit premier bobinage de détection ; et
des moyens de relèvement (40, 42) pour relever la grandeur d'un signal de sortie (CH1) dudit second circuit de détection (16) résultant de l'application dudit signal de test audit premier bobinage de détection (10).

7. Appareil selon la revendication 6, **caractérisé en ce qu'**il comprend aussi :
des moyens (42) pour déterminer si la grandeur dudit signal de sortie relevé (CH1) dudit second circuit de détection (16) se situe dans une fourchette de valeurs prédéterminée ; et
des moyens (42, 43, 45) pour produire un signal d'erreur lorsqu'il est établi que la grandeur dudit signal de sortie relevé (CH1) ne se situe pas dans ladite fourchette de valeurs prédéterminée.

8. Appareil selon la revendication 7, **caractérisé en ce que** :
lesdits moyens de sondage (40, 42) comprennent un convertisseur analogique-numérique (40) connecté à et commandé par, un micro-ordinateur (42) pour convertir le signal de sortie (CH1) dudit second circuit de détection (16) en valeurs numériques (DONNEES) qui représentent la grandeur dudit signal de sortie (CH1) ; et
lesdits moyens (42) pour déterminer si la grandeur dudit signal de sortie (CH1) se situe dans la fourchette de valeurs prédéterminée comprennent des moyens (E²PROM) dans ledit micro-ordinateur (42) pour enregistrer la première et la seconde valeurs de seuil et les moyens (66, 68) pour comparer lesdites valeurs de seuil aux dites valeurs numériques (DONNEES).

9. Appareil selon la revendication 8, **caractérisé en ce que** lesdits moyens de comparaison (66, 68) comprennent un détecteur de pic (66) pour déceler une valeur de pic parmi lesdites valeurs numériques (DONNEES), et un comparateur (68) pour comparer ladite valeur de pic à la première et à la seconde valeur de seuil.

10. Appareil selon l'une quelconque des revendications 6 à 9, **caractérisé en ce que** ledit signal test est un signal carré.

11. Appareil selon l'une quelconque des revendications 6 à 10, **caractérisé en ce que** lesdits moyens pour appliquer ledit signal test (42, 44, 54, 50, 48) comprennent :
un convertisseur numérique-analogique (44) ;
un micro-ordinateur (42) pour contrôler ledit convertisseur numérique-analogique (44) et lui fournir des mots codes successifs représentant la grandeur d'un signal d'ondes à des moments successifs, ledit convertisseur numérique-analogique (44) produisant un signal de sortie d'ondes ; et
des moyens (54, 50) pour appliquer ledit signal de sortie d'ondes au dit premier bobinage de détection (10) comme ledit signal test.
